# EUROPEAN PATENT APPLICATION

(11) **EP 4 753 011 A1**
(43) Date of publication of application: **03.06.2026**
(21) Application number: 24868645.3
(22) Date of filing: 13.09.2024
(51) Int. Cl.: H01M 10/42, H01M 50/502, A62D 1/00, A62C 3/16, A62C 35/10, H01M 50/176, H01M 50/178, H01M 50/548

(54) **BATTERY MODULE**

(30) Priority: 21.09.2023 KR 20230126661; 21.09.2023 KR 20230126662; 29.07.2024 KR 20240100301
(71) Applicant: LG Energy Solution, Ltd., Seoul 07335 (KR)
(72) Inventor: LEE, Han Young, Daejeon 34122 (KR)
(74) Representative: BCKIP Part mbB
(86) International application number: PCT/KR2024/014057
(87) International publication number: WO 2025/063668

(57) **Abstract**

A battery module of the present disclosure may include: a first group including a plurality of battery cells arranged in a row; a second group spaced apart from the first group and including a plurality of battery cells arranged in a row; a third group including a plurality of battery cells arranged in a row between the first group and the second group; a fourth group spaced apart from the third group and including a plurality of battery cells arranged in a row between the first group and the second group; a fire extinguishing member disposed in a space between the third group and the fourth group; and a case accommodating the first to fourth groups and the fire extinguishing member.

## Description

### TECHNICAL FIELD

### CROSS-REFERENCE TO RELATED APPLICATIONS

This application is based on and claims priorities from Korean Patent Application Nos. 10-2023-0126661, 10-2023-0126662, and 10-2024-0100301, filed on September 21, 2023, September 21, 2023, and July 29, 2024, respectively, with the Korean Intellectual Property Office, the disclosure of which is incorporated herein in their entireties by reference.

### TECHNICAL FIELD

The present disclosure relates to a battery module.

### BACKGROUND ART

A secondary battery (rechargeable battery) is a battery that is chargeable and dischargeable, which is unlike a primary battery that is not chargeable. Low-capacity secondary batteries are used in small portable electronic devices, such as mobile phones, laptop computers, and camcorders, while large-capacity secondary batteries are widely used as power sources for driving motors in medium- and large-sized devices, including electric vehicles (EVs), such as hybrid vehicles, and energy storage systems (ESS).

Secondary batteries may be used in the form of battery cells, and the battery cells may be of a form in which a plurality of electrodes are alternately stacked with a separator interposed therebetween inside a cladding, and the space inside the cladding is filled with an electrolyte. The plurality of battery cells may be electrically connected to form a battery module.

Meanwhile, safety issues have arisen in these battery cells and modules, due to problems such as ignition during the manufacturing and use processes (operation), and research is being conducted to solve these issues.

### SUMMARY

### TECHNICAL PROBLEM

The present disclosure provides a battery module capable of preventing flames from spreading to the surroundings when a battery cell in the battery module ignites.

### TECHNICAL SOLUTION

A battery module according to present disclosure may include: a first group including a plurality of battery cells arranged in a row; a second group spaced apart from the first group and including a plurality of battery cells arranged in a row; a third group including a plurality of battery cells arranged in a row between the first group and the second group; a fourth group spaced apart from the third group and including a plurality of battery cells arranged in a row between the first group and the second group; a fire extinguishing member disposed in a space between the third group and the fourth group; and a case accommodating the first to fourth groups and the fire extinguishing member.

The fire extinguishing member may be provided in the central portion of the case.

The battery module may further include a busbar electrically connecting the first to fourth groups.

The fire extinguishing member may include a fire extinguishing agent in powder or liquid form; and a cladding accommodating the fire extinguishing agent.

The cladding may be a plastic case having a rectangular box shape.

The cladding may be made of a sheet including a metal base layer and a resin layer formed on a surface of the metal base layer.

The battery cells belonging to each of the first group and the second group each have the same size, and the battery cells belonging to each of the third group and the fourth group each have the same size.

Each of the first to fourth groups may include a plurality of bidirectional battery cells.

The first and second groups may be disposed adjacent to opposite sides of the case in a length direction, respectively, and the third and fourth groups may be disposed adjacent to opposite sides of the case in a height direction, respectively.

The electrode leads of the battery cells belonging to each of the first group and the second group may protrude toward opposite sides in a width direction of the case, and the electrode leads of the battery cells belonging to each of the third group and the fourth group protrude toward opposite sides in a width direction of the case.

The sum of the length of the battery cells belonging to the third group and the length of the battery cells belonging to the fourth group in the height direction of the case may be smaller than the length of the battery cells belonging to the first group in the height direction.

The sum of the length of the battery cells belonging to the third group, the length of the battery cells belonging to the fourth group, and the length of the fire extinguishing member in the height direction of the case may be equal to the length of the battery cells of the first group in the height direction of the case.

Meanwhile, the first group and the second group may each include a plurality of bidirectional battery cells, and the third and fourth groups may each include a plurality of unidirectional battery cells.

The first and second groups may be disposed adjacent to opposite sides of the case in a length direction, respectively, and the third and fourth groups may be disposed adjacent to opposite sides of the case in a width direction, respectively.

The electrode leads of the battery cells belonging to each of the first group and the second group may protrude toward opposite sides in a width direction of the case, the electrode leads of the battery cells belonging to the third group may protrude toward the one side in the width direction of the case, and the electrode leads of the battery cells belonging to the fourth group may protrude toward the one side in the width direction of the case.

The sum of the length of the battery cells belonging to the third group and the length of the battery cells belonging to the fourth group in the width direction of the case may be smaller than the length of the battery cells belonging to the first group in the width direction of the case.

The sum of the length of the battery cells belonging to the third group, the length of the battery cells belonging to the fourth group, and the length of the fire extinguishing member in the height direction of the case may be equal to the length of the battery cells of the first group in the width direction of the case.

### ADVANTAGEOUS EFFECTS

The battery module according to the present disclosure may include a plurality of battery groups, each of which includes a plurality of battery cells, a fire extinguishing member, and a case configured to accommodate the battery cells and the fire extinguishing member. These battery groups are arranged in a form surrounding the fire extinguishing member inside the case. Thus, even when a fire occurs in some battery cells, the fire may be effectively blocked from spreading to surrounding battery cells.

Meanwhile, the effects according to the present disclosure are not limited to the features exemplified above, and more diverse effects are included in this specification.

### BRIEF DESCRIPTION OF THE DRAWINGS

The drawings attached herewith are merely illustrative of embodiments of the present disclosure, and take on the role of further facilitating the understanding of the technical idea of the present disclosure along with the descriptions herein. Thus, the present disclosure should not be construed as being limited to those illustrated in the drawings.
FIG. 1 is a view illustrating a battery cell igniting within a conventional battery module.
FIG. 2 is a perspective view illustrating a battery module according to a first embodiment of the present disclosure.
FIG. 3 is a cross-sectional view illustrating the internal structure of the battery module according to the first embodiment of the present disclosure.
FIG. 4 is a cross-sectional view of the battery module of FIG. 3 taken along the line AA'.
FIG. 5 is a cross-sectional view of the battery module of FIG. 3 taken along the line BB'.
FIG. 6 is a view illustrating electrode terminals connected to battery cells of the battery module according to the first embodiment of the present disclosure.
FIG. 7 is a cross-sectional view illustrating the structure in which the second and fourth busbars are connected to the battery module according to the first embodiment of the present disclosure.
FIG. 8 is a cross-sectional view illustrating the structure in which the first, third, and fifth busbars are connected to the battery module according to the first embodiment of the present disclosure.
FIG. 9 is a perspective view illustrating a fire extinguishing member in a state where a fire extinguishing agent is accommodated in a plastic case.
FIG. 10 is a cross-sectional view illustrating the fire extinguishing member according to the first embodiment of the present disclosure in a state where a fire extinguishing agent is accommodated in a pouch.
FIG. 11 is a perspective view illustrating a battery module according to a second embodiment of the present disclosure.
FIG. 12 is a cross-sectional view illustrating the internal structure of the battery module according to the second embodiment of the present disclosure.
FIG. 13 is a view illustrating electrode terminals connected to battery cells of the battery module according to the second embodiment of the present disclosure.
FIG. 14 is a cross-sectional view illustrating the structure in which the second and third busbars are connected to the battery module according to the second embodiment of the present disclosure.
FIG. 15 is a cross-sectional view illustrating the structure in which the first, fourth, and fifth busbars are connected to the battery module according to the second embodiment of the present disclosure.
FIG. 16 is a perspective view illustrating a fire extinguishing member according to the second embodiment of the present disclosure in the state where a fire extinguishing agent is accommodated in a plastic case.
FIG. 17 is a cross-sectional view illustrating the fire extinguishing member according to the second embodiment of the present disclosure in the state where a fire extinguishing agent is accommodated in a pouch.
FIG. 18 is a view illustrating a battery module according to an embodiment of the present disclosure applied to a battery pack and a vehicle.

In some of the accompanying drawings, corresponding components are given the same reference numerals. A person ordinarily skilled in the art would appreciate that the drawings illustrate elements simply and clearly and are not necessarily drawn to scale. For example, in order to aid understanding of various embodiments, the dimensions of some elements illustrated in the drawings may be exaggerated compared to other elements. In addition, elements that are useful or essential in commercially implementable embodiments but are known in the art may often not be described in order to avoid impeding the understanding of the spirit of various embodiments of the present disclosure.

### DETAILED DESCRIPTION

Hereinafter, with reference to the accompanying drawings, embodiments of the present disclosure are described so that those ordinarily skilled in the art can easily implement the present disclosure. However, the present disclosure may be implemented in various different forms, and is not limited or restricted by the following examples.

In order to clearly describe the present disclosure, detailed descriptions of portions unrelated to the description or related known technologies that may unnecessarily obscure the germane subject matter of the present disclosure have been omitted, and when adding reference numerals to components in each drawing in this specification, the same or similar reference numerals are assigned to the same or similar components throughout the specification.

In addition, terms and words used in the specification and claims should not be construed as limited to their ordinary or dictionary meanings, but should be construed as meanings and concepts consistent with the technical idea of the present disclosure based on the principle that an inventor may appropriately define the concepts of terms in order to explain his or her invention in the best way.

Throughout this specification, when a part is described to "include" or "have" a component, it means that, unless explicitly stated otherwise, additional components may be included as well, rather than being excluded.

Battery cells within a battery module may ignite due to various causes. For example, when a battery cell is overcharged, flammable gas may be generated in the battery cell, which may cause the battery cell to ignite. Similarly, when a battery cell is over-discharged, the battery cell may ignite due to an internal short circuit caused by damage to the electrode plates inside the battery cell. In addition, when, for example, an external impact is applied to a battery cell, the separator of the battery cell may be damaged, leading to contact between the positive and negative electrodes, which may cause the battery cell to ignite.

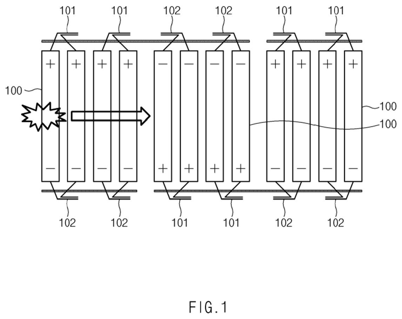

FIG. 1 is a view illustrating a battery cell 100 igniting within a battery module. Referring to FIG. 1, the battery module includes a plurality of battery cells 100 and positive leads 101 and negative leads 102 interconnected with each other. Here, the plurality of battery cells 100 are arranged adjacent to each other within the battery module to increase the overall capacity of the battery module. However, when some of the battery cells 100 ignite, a thermal runaway phenomenon occurs, causing flames to spread to the surrounding battery cells 100.

In consideration of this situation, the present disclosure provides a battery module that, even when a fire occurs in some of the battery cells within the module, the fire may be effectively blocked from spreading to surrounding battery cells.

Hereinafter, a battery module according to the present disclosure will be described with reference to the accompanying drawings.

### First Embodiment

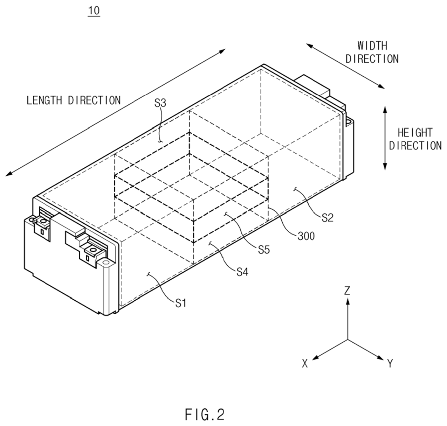

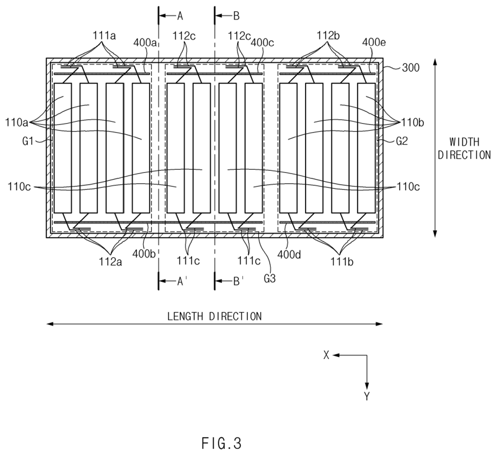

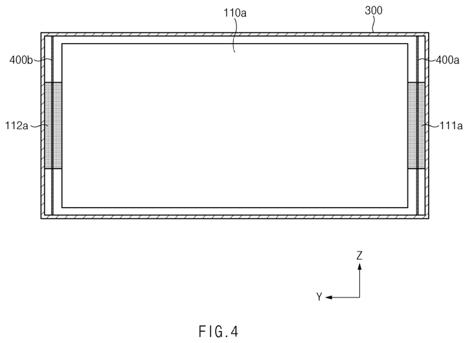

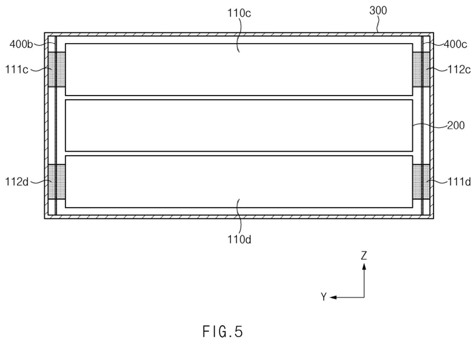

FIG. 2 is a perspective view illustrating a battery module 10 according to the first embodiment of the present disclosure, and FIG. 3 is a top cross-sectional view illustrating the internal structure of the battery module 10 according to the present disclosure viewed from above. FIG. 4 is a side cross-sectional view of the battery module 10 of FIG. 3 taken along the line AA', and FIG. 5 is a side cross-sectional view of the battery module 10 of FIG. 3 taken along the line BB'.

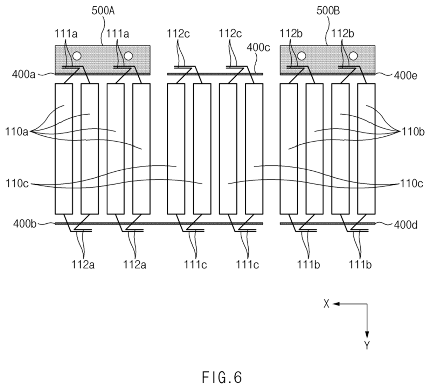

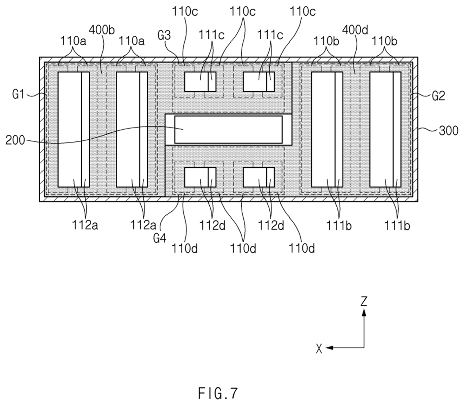

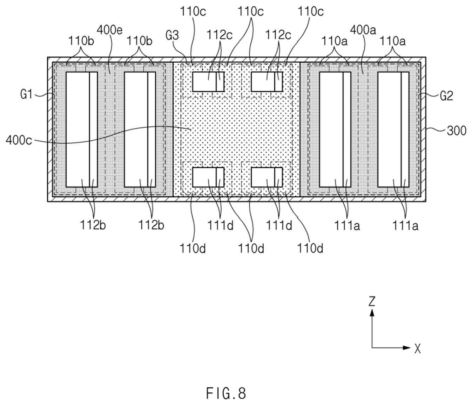

FIG. 6 is a top view illustrating the electrode terminals connected to battery cells of the battery module 10 according to the first embodiment of the present disclosure. FIG. 7 is a side cross-sectional view illustrating the structure in which second and fourth busbars are connected to the battery module 10 according to the first embodiment of the present disclosure, and FIG. 8 is a side cross-sectional view illustrating the structure in which the first, third, and fifth busbars are connected to the battery module 10 according to the first embodiment of the present disclosure.

Referring to FIG. 2, the battery module 10 according to the first embodiment of the present disclosure includes a case 300, and includes a plurality of regions S1, S2, S3, S4, and S5 inside the case 300. For example, the battery module 10 includes a first region S1 formed at one side of the case 300 in the length direction, a second region S2, formed at the other side of the case 300 in the length direction, a third region S3 formed at one side of the case 300 in the height direction among the regions between the first region S1 and the second region S2 in the case 300, a fourth region S4, formed at the other side of the case 300 in the height direction among the regions between the first region S1 and the second region S2 in the case 300, and a fifth region S5, formed between the third region S3 and the fourth region S4 in the height direction of the case 300.

Referring to FIGS. 2 to 8, the battery module 10 according to the first embodiment of the present disclosure includes: a first group G1 including a plurality of first bidirectional battery cells 110a arranged in a row; a second group G2 spaced apart from the first group G1 and including a plurality of second bidirectional battery cells 110b arranged in a row; a third group G3 including a plurality of third bidirectional battery cells 110c arranged in a row between the first group G1 and the second group G2; a fourth group G4 spaced apart from the third group G3 and including a plurality of fourth bidirectional battery cells 110d arranged in a row between the first group G1 and the second group G2; a fire extinguishing member 200 provided in a space between the third group G3 and the fourth group G4; and a case 300 accommodating the first to fourth groups G1 to G4 and the fire extinguishing member 200. In this case, the first to fourth groups G1 to G4 are arranged in a form surrounding the fire extinguishing member 200 inside the case 300 (see, e.g., FIG. 7). Thus, even when a fire occurs in some of the battery cells 110a, 110b, 110c, and 110d of respective groups, the fire may be efficiently blocked from spreading to the surrounding battery cells 110a, 110b, 110c, and 110d.

The first group G1, which includes the plurality of first bidirectional battery cells 110a arranged in a row, may be formed in various regions within the battery module 10. For example, the first group G1 including four battery cells 110a may be located in a first region S1 formed at one side of the case 300 in the length direction within the battery module 10. Here, the four first bidirectional battery cells 110a included in the first group G1 may each be a secondary battery, capable of charging and discharging.

The first bidirectional battery cells 110a may be arranged in various directions within the first region S1. For example, the first bidirectional battery cells 110a may be arranged in a row along the length direction of the case 300 in the first region S1.

Meanwhile, the first bidirectional battery cells 110a may have various structures. For example, the first bidirectional battery cells 110a may be prismatic battery cells, in each of which electrodes and a separator are accommodated in a rectangular box-shaped metal case. When the first bidirectional battery cells 110a are prismatic battery cells, the first bidirectional battery cells 110a may be installed in installation grooves (not illustrated), respectively, which are formed on the lower surface of the first region S1 in the case 300. In addition, the first bidirectional battery cells 110a may be pouch battery cells in each of which electrodes and a separator are accommodated in a film-shaped pouch in which a resin layer is formed on a metal substrate layer. When the first bidirectional battery cells 110a are pouch battery cells, the first bidirectional battery cells 110a may be sequentially arranged in one direction in the length direction of the module 10 in the first region S1.

The second group G2, which includes the plurality of second bidirectional battery cells 110b arranged in a row, may be spaced apart from the first group G1 within the case 300. In addition, the second group G2 may be formed in various regions within the battery module 10. For example, the second group G2 including four battery cells 110b may be located in a second region S2 formed at one side of the case 300 in the length direction within the battery module 10. That is, the second group G2 may be located in the second region S2 formed at the opposite side of the first region S1 described above within the battery module 10. The second bidirectional battery cells 110b included in the second group G2 may each be a secondary battery, capable of charging and discharging.

The second bidirectional battery cells 110b may be arranged in various directions within the second region S2. For example, the second bidirectional battery cells 110b may be arranged in a row along the length direction of the case 300 in the second region S2. Here, the second bidirectional battery cells 110b may be prismatic battery cells or pouch battery cells, just like the first bidirectional battery cells 110a, and the second bidirectional battery cells 110b may have the same size and/or capacity as the first bidirectional battery cells 110a.

When the second bidirectional battery cells 110b are prismatic battery cells, the second bidirectional battery cells 110b may be installed in installation grooves (not illustrated), respectively, which are formed on the lower surface of the second region S2 in the case 300. Meanwhile, when the second bidirectional battery cells 110b are pouch battery cells, the second bidirectional battery cells 110b may be sequentially arranged in one direction in the second region S2.

The third group G3 may include the plurality of third bidirectional battery cells 110c arranged in a row in the region between the first group G1 and the second group G2. Therefore, the third group G3 may be located between the first group G1 and the second group G2 within the battery module 10. In particular, the third group G3 may be located in a third region S3 formed at one side of the case 300 in the height direction among the regions between the first region S1 and the second region S2 within the battery module 10. Here, the third bidirectional battery cells 110c, included in the third group G3, may each be a secondary battery capable of being charged and discharged.

The third bidirectional battery cells 110c may be arranged in various directions within the third region S3. For example, the third bidirectional battery cells 110c may be arranged in a row along the length direction of the case 300 in the third region S3.

Meanwhile, the third bidirectional battery cells 110c may have various structures. For example, the third bidirectional battery cells 110c may be prismatic battery cells, each of which accommodates electrodes and a separator in a rectangular cuboid metal case. In addition, the third bidirectional battery cells 110a may be pouch battery cells, each of which accommodates electrodes and a separator in a film-shaped pouch in which a resin layer is formed on a metal substrate layer.

Here, the third bidirectional battery cells 110c may be arranged in one direction in the third region S3. For example, the third region S3 is formed on the upper side of the fifth area S5, and is provided with a fire extinguishing member 200, and the third bidirectional battery cells 110c may be sequentially arranged in one direction on the upper side of the fire extinguishing member 200, provided in the fifth region S5.

The fourth group G4, which is spaced apart from the third group G3, may include the plurality of fourth bidirectional battery cells 110d arranged in a row in the region between the first group G1 and the second group G2. For example, the fourth group G4 may be located in a fourth region S4 formed at the other side of the case 300 in the height direction among the regions between the first region S1 and the second region S2 within the battery module 10. For example, the fourth group G4 may be provided at a position spaced apart from the third group G3 in the height direction of the case 300. Here, the fourth bidirectional battery cells 110d included in the fourth group G4 may each be a secondary battery, capable of being charged and discharged.

The fourth bidirectional battery cells 110d may be arranged in various directions within the fourth region S4. For example, the fourth bidirectional battery cells 110d may be arranged in a row along the length direction of the case 300 in the fourth region S4. Here, the fourth bidirectional battery cells 110d may be prismatic battery cells or pouch battery cells, just like the third bidirectional battery cells 110c, and the fourth bidirectional battery cells 110d may have the same size and/or capacity as the third bidirectional battery cells 110c. The fourth bidirectional battery cells 110d may be sequentially arranged in one direction in the fourth region S4.

The fire extinguishing member 200 includes a fire extinguishing agent that extinguishes fire, and may be provided in the space between the third group G3 and the fourth group G4. According to an embodiment, the fire extinguishing member 200 may be provided in a fifth region S5, formed between the third region S3 and the fourth region S4. For example, the fifth region S5 is formed on the upper side of the fourth region S4, and the fire extinguishing member 200 may be located in the fifth region S5 above the fourth bidirectional battery cells 110d, arranged in the fourth region S4 and below the third bidirectional battery cells 110c arranged in the second region S3.

Here, the third group G3 and the fourth group G4 are located between the first group G1 and the second group G2, and the fire extinguishing member 200 may be surrounded by a plurality of bidirectional battery cells 110a, 110b, 110c, and 110d, of respective groups within the battery module 10. In this way, by providing the fire extinguishing member 200 to be surrounded by the plurality of bidirectional battery cells 110a, 110b, 110c, and 110d of respective groups within the battery module 10, even when a fire occurs in some of the plurality of bidirectional battery cells 110a, 110b, 110c, and 110d, the fire extinguishing member 200 may effectively block the fire to suppress or prevent the fire from spreading to the surroundings.

The case 300 is a housing that accommodates the plurality of bidirectional battery cells 110a, 110b, 110c, and 110d, which are included in the first to fourth groups G1 to G4 and the fire extinguishing member 200, and may have a hollow rectangular box-shaped structure. In addition, the case 300 may be made of various materials. According to an embodiment, the case 300 may be made of a metal material such as an aluminum alloy, or a polymer-based material.

Meanwhile, the fire extinguishing member 200 may be provided in the central portion of the case 300. For example, the fifth region S5 where the fire extinguishing member 200 is located may be located in the central portion of the case 300.

In this case, the fire extinguishing member 200 is provided in the central portion of the case 300 without being biased to one side within the case 300. Thus, the fire extinguishing member 200 may be disposed at a position relatively close to all edges of the case 300. Since the fire extinguishing member 200 is located relatively close to the edge, even when a fire occurs at an edge inside the case 300 or at any position inside the battery module 10, the fire may be quickly extinguished.

Meanwhile, as described above, the first group G1 and the second group G2 may be arranged adjacent to the opposite sides of the case 300 in the length direction, respectively, and the third group G3 and the fourth group G4 may be arranged adjacent to the opposite sides of the case 30 in the height direction, respectively. Here, the fifth region S5, between the third group G3 and the fourth group G4, where the fire extinguishing member 200 is inserted, may have a shape that extends horizontally from one side to the other side in the width direction of the case 300. In this case, the fire extinguishing member 200 may be installed to extend horizontally, near the center of the inside of the case 300.

The first bidirectional battery cells 110a and the second bidirectional battery cells 110b may have the same shape and size. For example, the bidirectional battery cells 110a and 110b may have a rectangular box shape with different lengths in width, depth, and height, respectively. Here, as illustrated in FIG. 4, the lengths of the width and height of the bidirectional battery cells 110a and 110b may correspond to the size of the internal space of the battery module 10 having the rectangular box shape.

Meanwhile, the sum of the length of the third bidirectional battery cells 110c and the length of the fourth bidirectional battery cells 110d in the height direction of the case 300 may be smaller than the length of the first bidirectional battery cells 110a in the height direction of the case 300. In this case, the fifth region S5 where the fire extinguishing member 200 is inserted, may have a predetermined thickness in the height direction of the case 300.

For example, the sum of the length of the third bidirectional battery cells 110c, the length of the fourth bidirectional battery cells 110d, and the length of the fire extinguishing member 200 in the height direction of the case 300,' may be equal to the length of the first bidirectional battery cells 110a in the height direction of the case 300. According to an embodiment, one end surfaces of the first bidirectional battery cells 110a in the height direction of the case 300 may be located on the same plane as one end surfaces of the third bidirectional battery cells 110c in the height direction of the case 300, and the other end surfaces of the first bidirectional battery cells 110a in the height direction of the case 300 may be located on the same plane as the other end surfaces of the fourth bidirectional battery cells 110d in the height direction of the case 300.

In addition, as illustrated in FIG. 5, the length of the fire extinguishing member 200 of the height direction of the case 300 is substantially the same as the separation distance between the third bidirectional battery cells 110c and the fourth bidirectional battery cells 110d. In this case, the fire extinguishing member 200 with as much capacity as possible may be inserted between the third bidirectional battery cells 110c and the fourth bidirectional battery cells 110d.

Meanwhile, the third bidirectional battery cells 110c and the fourth bidirectional battery cells 110d may have the same size. In this case, the third bidirectional battery cells 110c and the fourth bidirectional battery cells 110d may have a rod shape that extends in the length direction of the case 300. Here, the rod may be a prism or a cylinder that extends in the length direction of the case.

In addition, the plurality of bidirectional battery cells 110a, 110b, 110c, and 110d included in the first to fourth groups G1 to G4 may be arranged in the length direction of the case 300 within the case 300. In this case, the electrode leads 111a and 112a of the plurality of first bidirectional battery cells 110a may protrude toward opposite sides in the width direction of the case 300 in the first region S1, and the electrode leads 111b and 112b of the plurality of second bidirectional battery cells 110b may protrude toward opposite sides in the width direction of the case 300 in the second region S2.

Here, the electrode leads 111c and 112c of the plurality of third bidirectional battery cells 110c may protrude toward opposite sides in the width direction of the case 300, and the electrode leads 111d and 112d of the plurality of fourth bidirectional battery cells 110d may protrude toward opposite sides in the width direction of the case 300. In this case, all of the electrode leads 111a, 111b, 111c, 111d, 112a, 112b, 112c, and 112d inside the battery module 10 protrude to opposite sides in the width direction of the case 300, and the busbars 400a, 400b, 400c, 400c, and 400e only need to be installed on opposite sides in the width direction of the case 300. Thus, the installation structure of the busbars 400a, 400b, 400c, 400c, and 400e may be simplified.

Meanwhile, referring to FIGS. 6 to 8, the battery module 10 according to the first embodiment of the present disclosure may further include busbars 400a, 400b, 400c, and 400d, that electrically connect the first to fourth groups G1 to G4. The busbars 400a, 400b, 400c, 400d, and 400e are members that are made of a metal with high electrical conductivity, such as copper or aluminum, and transmit current between a plurality of bidirectional battery cells 110a, 110b, 110c, and 110d. Electrode leads 111a, 111b, 111c, 111d, 112a, 112b, 112c, and 112d of the first to fourth groups G1 to G4 may be welded to the busbars 400a, 400b, 400c, 400d, and 400e.

According to an embodiment, the plurality of first bidirectional battery cells 110a included in the first group G1, may be connected in parallel, and the plurality of second bidirectional battery cells 110b in the second group G2, may be connected in parallel. In addition, the plurality of third bidirectional battery cells 110c included in the third group G3 may be connected in parallel, and the plurality of fourth bidirectional battery cells 110d included in the fourth group G4 may be connected in parallel.

In this case, the busbars 400a, 400b, 400c, 400d, and 400e may include a first busbar 400a to which the positive leads 111a of the first group G1 are connected, a second busbar 400b to which the negative leads 112a of the first group G1 and the positive leads 111c of the third group G3 are connected, a third busbar 400c to which the negative leads 112c of the third group G3 and the positive leads 111d of the fourth group G4 are connected in the vertical direction (in the Z-axis direction), a fourth busbar 400d to which the negative leads 112d of the fourth group G4 and the positive leads 111b of the second group G2 are connected, and a fifth busbar 400e to which the negative leads 112b of the second group G2 are connected. With the connection structure of these busbars 400a, 400b, 400c, 400d, and 400e, a circuit connected to the second group G2 via the first group G1, the third group G3, and the fourth group G4 may be formed inside the battery module 10, and charges directed to the second group G2 via the first group G1, the third group G3, and the fourth group G4 may be formed through the formed circuit.

Meanwhile, the busbars 400a, 400b, 400c, 400d, and 400e are not limited to the connection structure described above, and may have various structures depending on the series/parallel connection structure of the plurality of bidirectional battery cells 110a, 110b, 110c, and 110d included in the battery module 10. For example, when the plurality of bidirectional battery cells 110a, 110b, 110c, and 110d are all connected in parallel, only one busbar 400a, 400b, 400c, 400d, or 400e may be provided on each of one surface and the other surface of the case 300. In the meantime, when the plurality of bidirectional battery cells 110a, 110b, 110c, and 110d are connected in a mixed series/parallel form, as illustrated in FIGS. 6 to 8, a plurality of busbars 400a, 400b, 400c, 400d, and 400e may be provided on at least one of one surface and the other surface of the case 300.

Meanwhile, among the busbars 400a, 400b, 400c, 400d, and 400e, a pair of busbars (e.g., 400a and 400e) forming the maximum potential difference may each be provided with electrode terminals 500A and 500B electrically connected to an external power source or another adjacent battery module. In this case, the electrode terminals 500A and 500B may include a positive terminal 500A connected to positive leads welded to the busbar 400a, and a negative terminal 500B connected to negative leads welded to the busbar 400e.

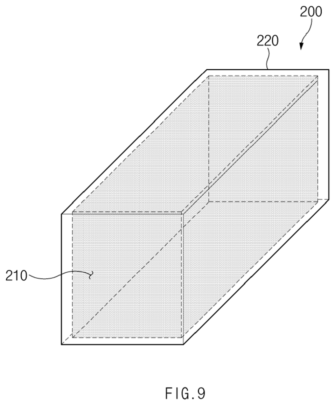

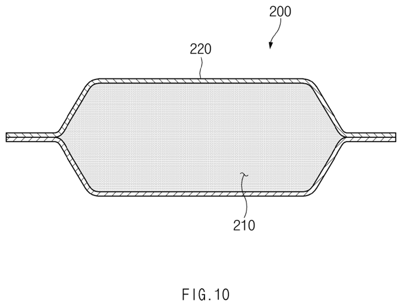

FIG. 9 is a perspective view illustrating the fire extinguishing member 200, according to the first embodiment of the present disclosure, in the state where a fire extinguishing agent 210 is accommodated in a plastic case serving as a cladding 220, and FIG. 10 is a cross-sectional view illustrating the fire extinguishing member 200, according to the first embodiment of the present disclosure, in the state where a fire extinguishing agent 210 is accommodated in a pouch serving as a cladding 220.

Referring to FIGS. 9 and 10, the fire extinguishing member 200 of the battery module 10, according to the first embodiment of the present disclosure, includes a fire extinguishing agent 210 in a powder or liquid state, and a cladding 220 that accommodates the fire extinguishing agent 210. When a flame comes into contact with the fire extinguishing member 200, the cladding 220 melts or tears, and the fire extinguishing agent 210 inside the cladding 220 is dispersed into the battery module 10. Therefore, when a fire occurs in a plurality of bidirectional battery cells 110a, 110b, 110c, and 110d included in the first to fourth groups G1 to G4, the fire extinguishing agent 210 is capable of spreading inside the battery module 10. As a result, in this case, the fire may be effectively blocked from spreading within the battery module 10 by the fire extinguishing agent 210 inside the cladding 220.

Here, the fire extinguishing agent 210 serves to come into contact with a high-temperature material to lower the temperature of the material, or to block the supply of oxygen to eliminate the flame. Various materials may be used as the fire extinguishing agent 210. For example, the fire extinguishing agent 210 may be a powdered fire extinguishing agent made of one or more of sodium bicarbonate (NaHCO3), potassium bicarbonate (KHCO3), and ammonium phosphate (NH4H2PO4). In addition, Novec^{™}, engineered fluid from 3M Corporation, may be used as the fire extinguishing agent 210.

The cladding 220 is a housing that accommodates the fire extinguishing agent 210 and may be made of various materials. For example, the cladding 220, as a low-density plastic, may be made of a thermoplastic resin that melts when in contact with a flame. Various materials may be used as the thermoplastic resin. One or more materials among polypropylene, polyamide, modified polyphenylene oxide (MPPO), and acrylonitrile butadiene styrene copolymer (ABS) may be used as the thermoplastic resin.

When the cladding 220 is made of low-density plastic, as illustrated in FIG. 9, the cladding 220 may have a rectangular box shape. Here, the cladding 220 may have a shape substantially identical to the shape of the fifth region S5 formed by being surrounded by the first to fourth groups G1 to G4 inside the battery module 10. In this case, the cladding 220 may be sandwiched between the first to fourth groups G1 to G4. Thus, even when an external impact is applied to the battery module 10, the cladding 220 may be prevented from being displaced. In this case, since the cladding 220 and surrounding battery cells 110a, 110b, 110c, and 110d are prevented from colliding with each other due to the displacement of the cladding 220, the cladding 220 may be prevented from being damaged by collision.

Meanwhile, as illustrated in FIG. 10, the cladding 220 may be a pouch made of a sheet including a metal substrate layer and a resin layer formed on the surface of the metal substrate layer. Here, a thin sheet of aluminum or stainless steel may be used as the metal substrate layer, and various types of resins, which have insulation and corrosion resistance properties, may be used as the resin layer. For example, polypropylene (PP) or polyethylene terephthalate (PET) may be used as the resin layer.

In this case, the cladding 220 is constructed as a thin sheet-like pouch, which may easily burst or tear when in contact with flame. Accordingly, when a fire occurs in a plurality of bidirectional battery cells 110a, 110b, 110c, and 110d included in the first to fourth groups G1 to G4, the cladding 220 quickly bursts or tears, and the fire extinguishing agent 210 inside the cladding 220 is discharged to the outside. Thus, the fire may be effectively prevented from spreading inside the battery module 10 due to the fire extinguishing agent 210 inside the cladding 220.

### Second Embodiment

The battery module of the second embodiment of the present disclosure differs from the first embodiment in that the third group and the fourth group include unidirectional battery cells. Subject matter that is common to the first embodiment will be omitted as necessary, and the second embodiment will be described focusing on the differences over the first embodiment. For example, it is obvious that, when necessary, the subject matter that is not described in the second embodiment may be regarded as the subject matter of the first embodiment.

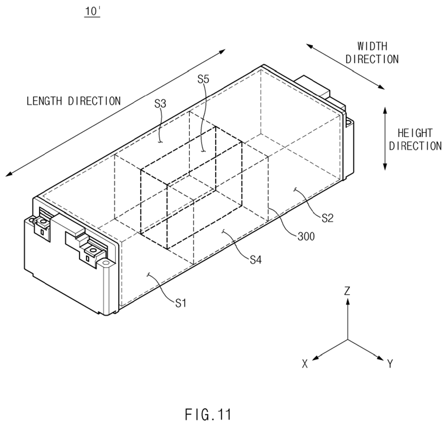

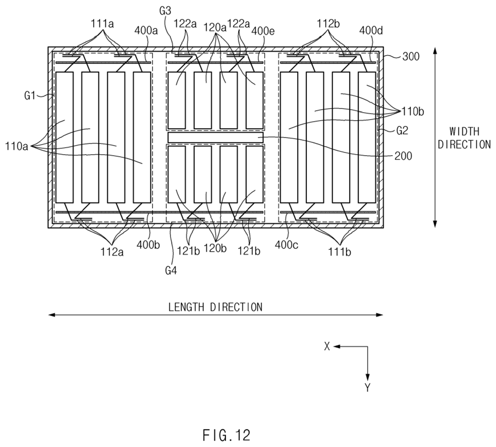

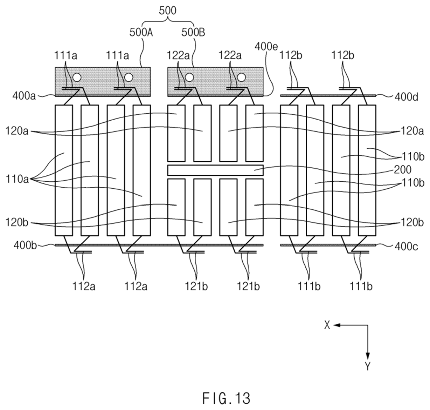

FIG. 11 is a perspective view illustrating a battery module 10', according to the second embodiment of the present disclosure, and FIG. 12 is a cross-sectional view illustrating the internal structure of the battery module 10', according to the second embodiment of the present disclosure. FIG. 13 is a view illustrating electrode terminals connected to battery cells of the battery module 10', according to the second embodiment of the present disclosure.

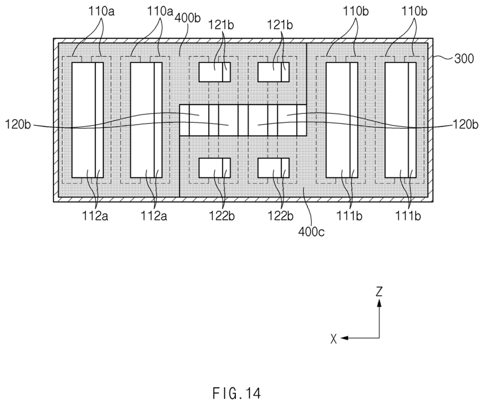

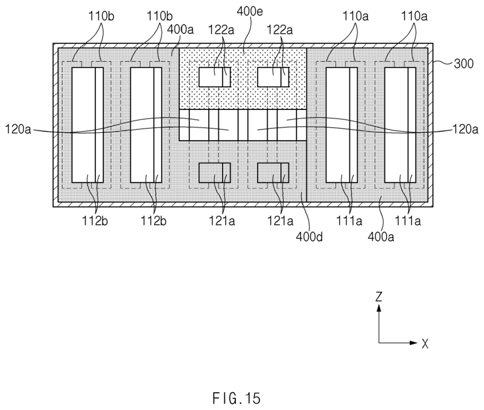

FIG. 14 is a cross-sectional view illustrating the structure where second and third busbars are connected to the battery module 10', according to the second embodiment of the present disclosure, and FIG. 15 is a cross-sectional view illustrating the structure where fourth and fifth busbars are connected to the battery module 10', according to the second embodiment of the present disclosure.

Referring to FIGS. 11 and 12, the battery module 10', according to the second embodiment of the present disclosure, includes: a first group G1 including a plurality of first bidirectional battery cells 110a arranged in a row; a second group G2 spaced apart from the second group G1 and including a plurality of second bidirectional battery cells 110b arranged in arrow; a third group G3 including a plurality of first unidirectional battery cells 110c arranged in a row between the first group G1 and the second group G2; a fourth group G4 spaced apart from the third group G3 and including a plurality of second unidirectional battery cells 120b arranged in a row between the first group G1 and the second group G2; a fire extinguishing member 200 provided in a space between the third group G3 and the fourth group G4; and a case 300 accommodating the first to fourth groups G1 to G4 and the fire extinguishing member 200. In this case, the first to fourth groups G1 to G4 are arranged in a form that surrounds the fire extinguishing member 200 inside the case 300. Thus, even when a fire occurs in some of the battery cells 110a, 110b, 120a, and 120b, the fire may be effectively extinguished by the fire extinguishing member 200. Therefore, the fire may be effectively blocked or suppressed from spreading to the surrounding battery cells 110a, 110b, 120a, and 120b.

The first group G1, which includes the plurality of first bidirectional battery cells 110a arranged in a row, may be formed in various regions within the battery module 10'. For example, the first group G1 may be located in the first area S1 formed at one side of the inside of the battery module 10' in the length direction of the case 300. Here, the first bidirectional battery cells 110a included in the first group G1 may each be a secondary battery capable of charging and discharging.

The first bidirectional battery cells 110a may be arranged in various directions within the first region S1. For example, the first bidirectional battery cells 110a may be arranged in a row along the length direction of the case 300 in the first region S1.

Meanwhile, the first bidirectional battery cells 110a may have various structures. For example, the first bidirectional battery cells 110a may be prismatic battery cells in each of which electrodes and a separator are accommodated in a rectangular box-shaped metal case. When the first bidirectional battery cells 110a are prismatic battery cells, the first bidirectional battery cells 110a may be installed in installation grooves (not illustrated), respectively, which are formed on the lower surface of the first region S1. In addition, the first bidirectional battery cells 110a may be pouch battery cells, each of which accommodates electrodes and a separator in a film-shaped pouch in which a resin layer is formed on a metal substrate layer. When the first bidirectional battery cells 110a are pouch battery cells, the first bidirectional battery cells 110a may be sequentially arranged in one direction in the first region S1.

The second group G2, which includes the plurality of second bidirectional battery cells 110b arranged in a row, may be spaced apart from the first group G1 within the case 300. In addition, the second group G2 may be formed in various regions within the battery module 10'. For example, the second group G2 may be located in the second area S2 formed at the other side of the inside of the battery module 10' in the length direction of the case 300. For example, the second group G2 may be located in the second region S2 formed at the opposite side of the first region S1 described above within the case 300 of the battery module 10'. The second bidirectional battery cells 110b included in the second group G2 may each be a secondary battery capable of charging and discharging.

The second bidirectional battery cells 110b may be arranged in various directions within the second region S2. For example, the second bidirectional battery cells 110b may be arranged in a row along the length direction of the case 300 in the second region S2. Here, the second bidirectional battery cells 110b may be prismatic battery cells or pouch battery cells, just like the first bidirectional battery cells 110a, and the second bidirectional battery cells 110b may have the same size and/or capacity as the first bidirectional battery cells 110a.

When the second bidirectional battery cells 110b are prismatic battery cells, the second bidirectional battery cells 110b may be installed in installation grooves (not illustrated), respectively, which are formed on the lower surface of the second region S2. Meanwhile, when the second bidirectional battery cells 110b are pouch battery cells, the second bidirectional battery cells 110b may be sequentially arranged in one direction in the second region S2.

The third group G3 may include the plurality of first unidirectional battery cells 120a arranged in a row in the region between the first group G1 and the second group G2. Therefore, the third group G3 may be located between the first group G1 and the second group G2 within the battery module 10'. In particular, the third group G3 may be located in a third region S3 formed at one side of the case 300 in the width direction among the regions between the first region S1 and the second region S2 within the battery module 10'. Here, the first unidirectional battery cells 120a included in the third group G3 may each be a secondary battery capable of charging and discharging.

The first unidirectional battery cells 120a may be arranged in various directions within the third region S3. For example, the first unidirectional battery cells 120a may be arranged in a row along the length direction of the case 300 in the first region S3.

Meanwhile, the first unidirectional battery cells 120a may have various structures. For example, the first unidirectional battery cells 120a may be prismatic battery cells, each of which accommodates electrodes and a separator in a rectangular box-shaped metal case. In addition, the first unidirectional battery cells 120a may be pouch battery cells, each of which accommodates electrodes and a separator in a film-shaped pouch in which a resin layer is formed on a metal substrate layer.

When the first unidirectional battery cells 120a are prismatic battery cells, the first unidirectional battery cells 120a may be installed in installation grooves (not illustrated), respectively, which are formed on the lower surface of the third region S3. Meanwhile, when the first unidirectional battery cells 120a are pouch battery cells, the first unidirectional battery cells 120a may be sequentially arranged in one direction in the third region S3.

The fourth group G4, which is spaced apart from the third group G3, may include the plurality of second unidirectional battery cells 120b arranged in a row in the region between the first group G1 and the second group G2. In particular, the fourth group G4 may be located in a fourth region S4 formed at the other side of the case 300 in the width direction among the regions, between the first region S1 and the second region S2 within the battery module 10'. That is, the fourth group G4 may be provided at a position spaced apart from the third group G3 in the width direction of the case 300. Here, the second unidirectional battery cells 120b included in the fourth group G4 may each be a secondary battery capable of being charged and discharged.

The second unidirectional battery cells 120b may be arranged in various directions within the fourth region S4. For example, the second unidirectional battery cells 120b may be arranged in a row along the length direction of the case 300 in the fourth region S4. Here, the second unidirectional battery cells 120b may be prismatic battery cells or pouch battery cells, which are similar to the first unidirectional battery cells 120a, and the second unidirectional battery cells 120b may have the same size and/or capacity as the first unidirectional battery cells 120a.

When the second unidirectional battery cells 120b are prismatic battery cells, the second unidirectional battery cells 120b may be installed in installation grooves, respectively, which are formed on the lower surface of the fourth region S4. Meanwhile, when the second unidirectional battery cells 120b are pouch battery cells, the second unidirectional battery cells 120b may be sequentially arranged in one direction in the fourth region S4.

Meanwhile, the fire extinguishing member 200 includes a fire extinguishing agent that extinguishes fire, and may be provided in the space between the third group G3 and the fourth group G4. For example, the fire extinguishing member 200 may be provided in a fifth region S5 formed between the third region S3 and the fourth region S4.

Here, the third group G3 and the fourth group G4 are located between the first group G1 and the second group G2, and the fire extinguishing member 200 may be surrounded by a plurality of battery cells 110a, 110b, 120a, and 120b within the battery module 10'. In this case, even when a fire occurs in some of the plurality of battery cells 110a, 110b, 120a, and 120b, the fire extinguishing member 200 may effectively block and prevent the fire from spreading to the surroundings.

The case 300 is a housing that accommodates the plurality of battery cells 110a, 110b, 120a, and 120b included in the first to fourth groups G1 to G4 and the fire extinguishing member 200, and may have a hollow rectangular box-shaped structure. In addition, the case 300 may be made of various materials. For example, the case 300 may be made of a metal material such as an aluminum alloy, or a polymer-based material.

Meanwhile, the fire extinguishing member 200 may be provided in the central portion of the case 300. For example, the fifth region S5, where the fire extinguishing member 200 is located may be located in the central portion of the case 300.

In this case, the fire extinguishing member 200 is provided in the central portion of the case 300 without being biased to one side within the case 300. Thus, the fire extinguishing member 200 may be disposed at a position relatively close to all edges of the case 300. Since the fire extinguishing member 200 is located relatively close to the edge, even when a fire occurs at an edge inside the case 300, or at any position inside the battery module 10, the fire may be quickly extinguished.

Meanwhile, as described above, the first group G1 and the second group G2 may be arranged adjacent to opposite sides of the case 300 in the length direction, respectively, and the third group G3 and the fourth group G4 may be arranged adjacent to opposite sides of the case 300 in the width direction, respectively. Here, the fifth region S5 between the third group G3 and the fourth group G4, where the fire extinguishing member 200 is inserted, may have a shape that extends vertically from the upper surface to the lower surface of the case 300. In this case, the fire extinguishing member 200 may be installed to extend vertically near the center of the inside of the case 300.

The first bidirectional battery cells 110a and the second bidirectional battery cells 110b may have the same shape and size. For example, the first bidirectional battery cells 110a and the second bidirectional battery cells 110b may each have a rectangular box shape with different lengths in width, depth, and height. Here, the lengths in the widths and depths of the bidirectional battery cells 110a and 110b may be substantially the same as those in the width and height of the internal space of the rectangular box-shaped battery module 10'.

Meanwhile, the sum of the length of the first unidirectional battery cells 120a and the length of the second unidirectional battery cells 120b in the width direction of the case 300 may be smaller than the length of the first bidirectional battery cells 110a in the width direction of the case 300. In this case, the fifth region S5, where the fire extinguishing member 200 is inserted, may have a thickness greater than or equal to a predetermined size in the width direction of the case 300.

For example, the sum of the length of the first unidirectional battery cells 120a, the length of the second unidirectional battery cells 120b, and the length of the fire extinguishing member 200 in the width direction of the case 300 may be equal to the length of the first bidirectional battery cells 110a in the width direction of the case 300. According to an embodiment, one end surfaces of the first bidirectional battery cells 110a in the width direction of the case 300 may be located on the same plane as one end surfaces of the first unidirectional battery cells 120a in the width direction of the case 300, and the other end surfaces of the first bidirectional battery cells 110a in the width direction of the case 300 may be located on the same plane as the other end surfaces of the second unidirectional battery cells 120b in the width direction of the case 300.

In addition, the length of the fire extinguishing member 200 in the width direction of the case 300 is substantially equal to the separation distance between the first unidirectional battery cell 120a and the second unidirectional battery cell 120b. In this case, the extinguishing member 200 with as much capacity as possible may be inserted between the first unidirectional battery cells 120a and the second unidirectional battery cells 120b.

Meanwhile, the first unidirectional battery cells 120a and the second unidirectional battery cells 120b may have the same shape and size. For example, the first unidirectional battery cells 120a and the second unidirectional battery cells 120b may each have a rectangular box shape with different lengths in width, depth, and height. According to an embodiment, the widths of the unidirectional battery cells 120a and 120b may be less than half the width of the internal space of the rectangular box-sized battery module 10'. In addition, the depths of the unidirectional battery cells 120a and 120b may be substantially equal to the height of the internal space of the battery module 10'.

The plurality of bidirectional battery cells 110a, 110b, 120a, and 120b included in the first to fourth groups G1 to G4 may be arranged in the length direction of the case 300 within the case 300. In this case, the electrode leads 111a and 112a of each of the plurality of first bidirectional battery cells 110a may protrude toward opposite sides in the width direction of the case 300 in the first region S1, and the electrode leads 111b and 112b of each of the plurality of second bidirectional battery cells 110b may protrude toward opposite sides in the width direction of the case 300 in the second region S1.

Here, the electrode leads 121a and 122a of each of the plurality of first unidirectional battery cells 120a may protrude toward one side in the width direction of the case 300, and the electrode leads 121b and 122b of each of the plurality of second unidirectional battery cells 120b may protrude toward the other side in the width direction of the case 300. In this case, all of the electrode leads 111a, 111b, 112a, 112b, 121a, 121b, 122a, and 122b inside the battery module 10 protrude to opposite sides in the width direction of the case 300, and the busbars 400a, 400b, 400c, 400d, and 400e only need to be installed on opposite sides in the width direction of the case 300. Thus, the installation structure of the busbars 400a, 400b, 400c, 400d, and 400e may be simplified.

Meanwhile, referring to FIGS. 13 to 15, the battery module 10' according to the second embodiment of the present disclosure may further include busbars 400a, 400b, 400c, 400d, and 400e that electrically connect the first to fourth groups G1 to G4. The busbars 400a, 400b, 400c, 400d, and 400e are members that are made of a metal with high electrical conductivity, such as copper or aluminum, and transmit current between a plurality of battery cells 110a, 110b, 120a, and 120b. Electrode leads 111a, 111b, 112a, 112b, 121a, 121b, 122a, and 122b of the first to fourth groups G1 to G4 may be welded to the busbars 400a, 400b, 400c, 400d, and 400e.

As illustrated in FIGS. 13 to 15, the plurality of first bidirectional battery cells 110a included the first group G1 may be connected in parallel in the first region S1, and the plurality of second bidirectional battery cells 110b included in the second group G2 may be connected in parallel in the second region S2. In addition, the plurality of first unidirectional battery cells 120a and the plurality of second unidirectional battery cells 120b included in the third group G3 and the fourth group G4 may be connected in parallel in the third region S3 and the fourth region S4, respectively.

In this case, the busbars 400a, 400b, 400c, 400d, and 400e may include a first busbar 400a to which the positive leads 111a of the first group G1 are connected, a second busbar 400b to which the negative leads 112a of the first group G1 and the positive leads 121b of the fourth group G4 are connected, a third busbar 400c to which the negative leads 122b of the fourth group G4 and the positive leads 111b of the second group G2 are connected, a fourth busbar 400d to which the negative leads 112b of the second group G2 and the positive leads 121a of the third group G3 are connected, and a fifth busbar 400e to which the negative leads 122a of the third group G3 are connected. With the structure of these busbars 400a, 400b, 400c, 400d, and 400e, a circuit connected to the third group G3 via the first group G1, the fourth group G4, and the second group G2 may be formed inside the battery module 10', and charges directed to the third group G3 via the first group G1, the fourth group G4, and the second group G2 may be formed through the formed circuit.

Meanwhile, the busbars 400a, 400b, 400c, 400d, and 400e are not limited to the connection structure described above, and may have various structures depending on the series/parallel connection structure of the plurality of battery cells 110a, 110b, 120a, and 120b included in the battery module 10'. For example, when the plurality of battery cells 110a, 110b, 120a, and 120b are all connected in parallel, only one busbar 400a, 400b, 400c, 400d, or 400e may be provided on each of one surface and the other surface of the case 300. In the meantime, when the plurality of battery cells 110a, 110b, 120a, and 120b are connected in a mixed series/parallel form, as illustrated in FIGS. 4 to 6, a plurality of busbars 400a, 400b, 400c, 400d, and 400e may be provided on at least one of one surface and the other surface of the case 300.

Meanwhile, among the busbars 400a, 400b, 400c, 400d, and 400e, a pair of busbars (e.g., 400a and 400e) forming the maximum potential difference may be provided with electrode terminals 500A and 500B which are electrically connected to an external power source or another adjacent battery module. In this case, the electrode terminals 500A and 500B may include a positive terminal 500A connected to positive leads welded to the busbar 400a, and a negative terminal 500B connected to negative leads welded to the busbar 400e.

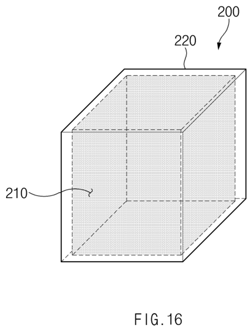

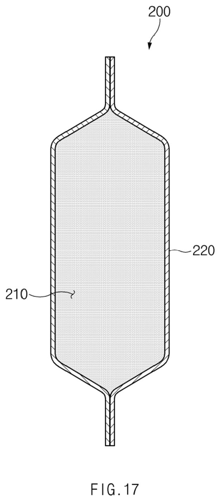

FIG. 16 is a perspective view illustrating the fire extinguishing member 200, according to the second embodiment of the present disclosure, in the state where a fire extinguishing agent 210 is accommodated in a metal case serving as a cladding 220, and FIG. 17 is a cross-sectional view illustrating the fire extinguishing member 200, according to the second embodiment of the present disclosure, in the state where a fire extinguishing agent 210 is accommodated in a pouch serving as a cladding 220.

Referring to FIGS. 16 and 17, the fire extinguishing member 200 of the battery module 10' according to the second embodiment of the present disclosure includes a fire extinguishing agent 210 in a powder or liquid state, and a cladding 220 that accommodates the fire extinguishing agent. When a flame comes into contact with the fire extinguishing member 200, the cladding 220 melts or tears, and the fire extinguishing agent 210 inside the cladding 220 is dispersed into the battery module 10. Therefore, when a fire occurs in a plurality of battery cells 110a, 110b, 120a, and 120b included in the first to fourth groups G1 to G4, the fire extinguishing agent 210 is capable of spreading inside the battery module 10. That is, in this case, the fire may be effectively blocked from spreading within the battery module 10 by the fire extinguishing agent 210 inside the cladding 220.

Here, the fire extinguishing agent 210 serves to come into contact with a high-temperature material to lower the temperature, or to block the supply of oxygen to eliminate the flame, and various materials may be used as the fire extinguishing agent 210. For example, a powdered extinguishing agent containing one or more of sodium bicarbonate (NaHCO3), potassium bicarbonate (KHCO3), and ammonium phosphate (NH4H2PO4) may be used as the extinguishing agent 210. In addition, Novec^{™} may be used as the fire extinguishing agent 210.

The cladding 220 is a housing that accommodates the fire extinguishing agent 210, and may be made of various materials. For example, the cladding 220 may be made of a thermoplastic resin that melts when in contact with a flame, as a low-density plastic.

In addition, the cladding 220 may have a rectangular box shape. Here, the cladding 220 may have a shape substantially identical to the shape of the fifth region S5 formed by being surrounded by the first to fourth groups G1 to G4 inside the battery module 10'. In this case, the cladding 220 may be sandwiched between the first to fourth groups G1 to G4. Thus, even when an external impact is applied to the battery module 10, the cladding 220 may be prevented from being displaced. In this case, since the cladding 220 and surrounding battery cells 110a, 110b, 120a, and 120b are prevented from colliding due to the displacement of the cladding 220, the cladding 220 may be prevented from being damaged by collisions.

Meanwhile, the cladding 220 may be a pouch made of a sheet including a metal substrate layer and a resin layer formed on the surface of the metal substrate layer. Here, thin sheets of aluminum or stainless steel may be used as the metal substrate layer, and various types of resins, which have insulation and corrosion resistance properties, may be used as the resin layer. For example, polypropylene (PP) or polyethylene terephthalate (PET) may be used as the resin layer.

In this case, the cladding 220 is constructed as a thin sheet-like pouch, which may easily burst or tear when in contact with flame. Accordingly, when a fire occurs in the plurality of battery cells 110a, 110b, 120a, and 120b included in the first to fourth groups G1 to G4, the cladding 220 quickly bursts or tears, and the fire extinguishing agent 210 inside the cladding 220 is discharged to the outside. Thus, the fire may be efficiently prevented from spreading inside the battery module 10'.

As described above, in the battery module 10 or 10' according to the embodiments of the present disclosure, the fire extinguishing member 200 is placed inside the case 300, and the plurality of battery cells 110a, 110b, 110c, and 110d are arranged inside the case 300 to surround the fire extinguishing member 200. As a result, even when a fire occurs in any battery cell inside the battery module 10 or 10', the fire extinguishing member may efficiently block the fire, thereby suppressing or preventing the fire from spreading to the surroundings. In addition, the sizes of the battery cells 110a, 110b, 110c, and 110d arranged inside the battery module 10 or 10' are set to be different from each other. Thus, the space for the fire extinguishing member 200 inside the battery module 10 or 10' may be efficiently secured. As a result, for example, a relatively wide space may be allocated to the battery cells 110a, 110b, 110c, and 110d while arranging the fire extinguishing member 200 within the battery module 10 or 10', which may lead to an improvement in energy density.

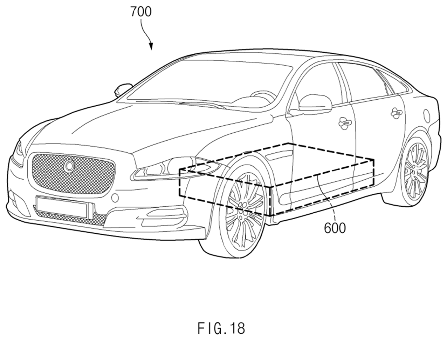

The battery module 10 or 10' according to the present disclosure may be equipped in a battery pack 600 and a vehicle 700, as illustrated in FIG. 18. For example, a plurality of battery modules 10 or 10' according to the present disclosure are coupled to manufacture a unit of a battery pack 600, and the battery pack 600 manufactured in this way may be mounted in a vehicle 700 such as an electric vehicle (EV) or a hybrid vehicle (HV) to power and drive the vehicle 700.

While the present disclosure has been described above with reference to several embodiments thereof, the present disclosure is not limited by the embodiments, and various changes and modifications can be carried out by those ordinarily skilled in the art to which the present disclosure pertains without departing from the technical spirit and equivalent scope of the present disclosure defined by the appended claims.

### [List of Reference Numerals]

| | | | |
|---|---|---|---|
| 10: | battery module | 100: | battery cell |
| 110: | bidirectional battery cell | 120: | unidirectional battery cell |
| 101, 111, 121: | positive lead | 102, 112, 122: | negative lead |
| 200: | fire extinguishing member | 210: | fire extinguishing agent |
| 220: | cladding | 300: | case |
| 400: | busbar | 500: | electrode terminal |
| G1: | first group | G2: | second group |
| G3: | third group | G4: | fourth group |
| S1: | first region | S2: | second region |
| S3: | third region | S4: | fourth region |
| S5: | fifth region | 600: | battery pack |
| 700: | vehicle | | |

## Claims

1. A battery module comprising:
a first group including a plurality of battery cells arranged in a row;
a second group spaced apart from the first group and including a plurality of battery cells arranged in a row;
a third group including a plurality of battery cells arranged in a row between the first group and the second group;
a fourth group spaced apart from the third group and including a plurality of battery cells arranged in a row between the first group and the second group;
a fire extinguishing body disposed in a space between the third group and the fourth group; and
a case accommodating the first to fourth groups and the fire extinguishing member.

2. The battery module of claim 1, wherein the fire extinguishing body is provided in a central portion of the case.

3. The battery module of claim 1, further comprising:
a busbar electrically connecting the first to fourth groups.

4. The battery module of claim 1, wherein the fire extinguishing body includes:
a fire extinguishing agent in powder or liquid form; and
a cladding accommodating the fire extinguishing agent.

5. The battery module of claim 4, wherein the cladding is a plastic case having a rectangular box shape.

6. The battery module of claim 4, wherein the cladding is a pouch made of a sheet including a metal base layer and a resin layer formed on a surface of the metal base layer.

7. The battery module of claim 1, wherein the battery cells belonging to each of the first group and the second group have a same size, and
wherein the battery cells belonging to each of the third group and the fourth group have a same size.

8. The battery module of claim 7, wherein each of the first to fourth groups includes multiple bidirectional battery cells.

9. The battery module of claim 8, wherein the first and second groups are disposed adjacent to opposite sides of the case in a length direction, respectively, and
wherein the third and fourth groups are disposed adjacent to opposite sides of the case in a height direction, respectively.

10. The battery module of claim 8, wherein electrode leads of each of the battery cells belonging to each of the first group and the second group protrude toward opposite sides in a width direction of the case, respectively, and
wherein electrode leads of the battery cells belonging to each of the third group and the fourth group protrude toward opposite sides in the width direction of the case, respectively.

11. The battery module of claim 8, wherein a sum of a length of the battery cells belonging to the third group and a length of the battery cells belonging to the fourth group in a height direction of the case is smaller than a length of the battery cells belonging to the first group in the height direction of the case.

12. The battery module of claim 11, wherein a sum of the length of the battery cells belonging to the third group, the length of the battery cells belonging to the fourth group, and a length of the fire extinguishing body in the height direction of the case is equal to the length of the battery cells of the first group in the height direction of the case.

13. The battery module of claim 7, wherein the first group and the second group each include multiple bidirectional battery cells, and
wherein the third group and the fourth group each include multiple unidirectional battery cells.

14. The battery module of claim 13, wherein the first and second groups are disposed adjacent to opposite sides of the case in a length direction, respectively, and
wherein the third and fourth groups are disposed adjacent to opposite sides of the case in a width direction, respectively.

15. The battery module of claim 13, wherein electrode leads of each of the battery cells belonging to each of the first group and the second group protrude toward opposite sides in a width direction of the case, respectively,
wherein electrode leads of the battery cells belonging to the third group protrude toward the one side in the width direction of the case, and
wherein electrode leads of the battery cells belonging to the fourth group protrude toward the other side in the width direction of the case.

16. The battery module of claim 13, wherein a sum of a length of the battery cells belonging to the third group and a length of the battery cells belonging to the fourth group in a width direction of the case is smaller than a length of the battery cells belonging to the first group in the width direction of the case.

17. The battery module of claim 16, wherein a sum of the length of the battery cells belonging to the third group, the length of the battery cells belonging to the fourth group, and a length of the fire extinguishing body in the width direction of the case is equal to a length of the battery cells belonging to the first group in the width direction of the case.
